# EUROPÄISCHE PATENTSCHRIFT

(11) **EP 1 515 127 B1**
(45) Veröffentlichungstag und Bekanntmachung des Hinweises auf die Patenterteilung: **22.09.2010**
(21) Anmeldenummer: 04020514.8
(22) Anmeldetag: 30.08.2004
(51) Int. Cl.: G01K 1/12, G01K 3/06

(54) **Temperatur-Fühlerkabel**
Temperature sensor cable
Câble capteur de température

(30) Priorität: 11.09.2003 DE 10341961
(43) Veröffentlichungstag der Anmeldung: 16.03.2005
(73) Patentinhaber: HEW-Kabel GmbH & Co. KG, 51688 Wipperfürth (DE)
(72) Erfinder: Schwamborn, Klaus, 51688 Wipperfürth (DE); Dlugas, Wolfgang, 51688 Wipperfürth (DE)
(74) Vertreter: Mende, Eberhard

(56) Entgegenhaltungen:
- DE-A- 3 233 928
- GB-A- 1 031 863
- US-A- 4 791 966
- US-A- 4 864 107
- US-A1- 2002 062 984

## Beschreibung

Die vorliegende Erfindung betrifft ein Temperatur - Fühlerkabel, bestehend aus einer definierten Länge eines Temperaturfühlers in Form eines auf einem Kernstrang angeordneten Widerstands-Messdrahtes und mit den Enden des Widerstands-Messdrahtes verbundenen niederohmigen elektrischen Anschlussdrähten.

Seit langem ist es bekannt ( CH -PS 399 774), zur Messung von Temperaturen am Messort als Temperaturfühler Drahtwicklungen einzusetzen, beispielsweise aus einem Widerstandsdraht aus Platin. Der Widerstand der Wicklung ändert sich in Abhängigkeit von der jeweiligen Umgebungstemperatur, so daß sich die Temperatur durch Messung des augenblicklichen Widerstandes der Wicklung beispielsweise mittels einer Brückenschaltung bestimmen lässt.
Nachteilig für diese bekannte Temperatur - Messeinrichtung ist deren örtliche Begrenzung wegen der im wesentlichen punktförmigen Temperaturerfassung. Zur Temperaturüberwachung von zum Beispiel in Rohren geführten Medien, Flüssigkeiten oder Gasen, wäre eine Vielzahl solcher bekannter Temperaturfühler notwendig, um die Temperatur des jeweiligen Mediums über längere Strecken zu erfassen.

Man ist deshalb schon dazu übergegangen, etwa in der chemischen Industrie zur Überwachung der Temperatur über längere Strecken geführter Medien, die das Medium führende Rohrleitung mit einem sogenannten Temperatur - Fühlerkabel zu umwickeln. Ein solches Temperatur /- Fühlerkabel besteht im wesentlichen aus dem Temperaturfühler in Form eines auf einem Kernstrang angeordneten Widerstands-Messdrahtes und an seinen Enden angeschlossenen niederohmigen Anschlussdrähten, vgl. den Prospekt "HEW-THERM Heizleitungen" der Firma HEW-Kabel, H. Eilentropp GmbH & Co. kG, Wippefürth, nene Ausgabe 1997. Die in diesem Fall über eine längere Strecke gemessene Betriebstemperatur der zu transportierenden Medien kann dann, wie bekannt, durch die Widerstandsänderung des zum Beispiel aus Platin oder Nickel hergestellten Widerstands-Messdrahtes mittels einer Brückenschaltung ermittelt werden.

Im Zuge der Neuordnung des Europäischen Marktes und den damit einhergehenden Forderungen nach mehr Eigensicherheit auch von Messkreisen und Regeleinrichtungen, insbesondere in explosionsgefährdeten Bereichen der Technik, sind die im Markt erhältlichen Temperatur - Fühlerkabel jedoch nicht geeignet, diesen Forderungen zu genügen.

Der Erfindung liegt daher die Aufgabe zugrunde, eine Lösung für ein Temperatur - Fühlerkabel anzugeben, das als eigensicher im Sinne der neuesten Normen und Vorschriften anzusehen und daher auch für den Einsatz in explosionsgefährdeten Bereichen geeignet ist.

Gemäß der Erfindung besteht die Lösung darin, daß die Anschlussdrähte und der Widerstands-Messdraht jeweils definierter Länge einschließlich ihrer Verbindungsstellen von einer gemeinsamen Isolierung aus einem hochtemperaturbeständigen Fluorpolymer umschlossen sind, und daß die gemeinsame Isolierung von einer geschlossenen Bewicklung aus einem mechanisch hochfesten Kunststoffband überdeckt ist, auf der sich ein aus metallischen Einzeldrähten bestehender Schutzleiter befindet, der seinerseits von einem Außenmantel umschlossen ist. Ein solches Kabel ist schlagprüfungssicher, d.h. es ist auch unter schwierigsten äußeren Bedingungen einsetzbar. Das Temperatur - Fühlerkabel ist zur Erfassung von Dauerbetriebstemperaturen der etwa in einer Rohrleitung geführten Medien bis 260 ° geeignet. Im Falle von Rohrleitungen kann das Kabel unmittelbar auf die Rohroberfläche unterhalb der Wärmeisolierung aufgewickelt sein, damit lässt sich auch über längere Strecken eine hinreichende Temperaturmessung und damit eine genaue Temperaturführung des Mediums mittels geeigneter Regeleinrichtungen herbeiführen. Hochfest beinhaltet in diesem Zusammenhang eine hohe Zug-, Schlag- und Kerbfestigkeit.

Bekannt ist bereits ein elektrisches Heizkabel (US-A-4,864,107), bei dem ein um einen zentralen Kernstrang gewickelter Heizleiter längs mitgeführte stromführende elektrische Leiter in Abständen kontaktiert, indem deren Isolierung an den Kontaktstellen entfernt wird. Eine gemeinsame Isolierung von Heizleiter und elektrischen Leitern ist nicht vorgesehen, sie ist auch nicht beabsichtigt, da der unisolierte Heizleiter die ihm gegenüber isolierten stromführenden elektrischen Leiter nur in Abständen kontaktieren soll.

Bei einem anderen bekannten elektrischen Heizkabel (DE 32 33 928A) mit in Abständen vorgesehenen Kontaktstellen, das auch als Temperaturmesskabel verwendet werden kann, sind die isolierten stromführenden elektrischen Leiter (Speiseadem) miteinander verseilt. Der Heizleiter, der die Leiter der Speiseadern in Abständen kontaktiert, ist um dieses Verseilbündel herumgewickelt. Als Isolierung der Speiseadern dient hier ein PTFE-Band, das um die Leiter im ungesinterten Zustand herumgewickelt und anschließend gesintert wird. Solche PTFE-Bänder sind auch für elektrische Kabel schon seit langem bekannt (US-A-4,791,966).

Zweckmäßig wird man die für den Widerstands-Messdraht und die Anschlussleiter gemeinsame Isolierung aus einem hochtemperaturbeständigen Fluorpolymer herstellen, etwa aus einem aus der Schmelze verarbeitbaren Tetrafluorethylen - Perfluoralkylvinylether - Copolymerisat ( TFA / PFA ) oder aus einem Polytetrafluorethylen - Perfluormethylvinylether - Copolymerisat, auch bekannt unter dem Handelsnamen HYFLON MFA. Auch andere bekannte Fluorpolymere, wie das Polyvinylidenfluorid ( PVDF ) oder das Ethylen - Tetrafluorethylen ( ETFE ) können eine vorteilhafte Anwendung finden.
Eine besonders vorteilhafte Ausführungsform der Erfindung ergibt sich bei einer für den Widerstands-Messdraht und die Anschlussleiter gemeinsamen Isolierung aus einem aus der Schmelze nicht verarbeitbaren Polytetrafluorethylen (PTFE). Das gilt vor allem dann, wenn die gemeinsame Isolierung aus einem ungesintert gewickelten und anschließend gesinterten Polytetrafluorethylen - Band besteht.

Weist, wie nach der Erfindung auch vorgesehen, das Polytetrafluorethylen - Band, eine plankonvexe Querschnittsform auf oder ist es im Querschnitt schalenförmig ausgebildet, wobei von der Bandmitte aus nach beiden Seiten die Banddicke bis zum Rand stufenlos abnimmt, ergibt sich nach dem Wickeln und anschließenden Sintern des PTFE - Bandes eine besonders kompakte Umhüllung mit geschlossener glatter äußerer Oberfläche. Eine solche glatte und nach Außen dichte Oberfläche lässt sich mit im Markt üblichen PTFE - Bändern mit rechteckförmiger Querschnittsform nicht erreichen. Die Kompaktheit der Umhüllung sowie deren glatte und dichte äußere Oberfläche ist aber gerade für den Einsatz des Temperatur - Fühlerkabels in einer durch Fette, Öle oder aggressive Medien beeinflussten Umgebung unerlässlich.

Das nach der Erfindung auf die Isolierung in einer oder mehreren geschlossenen Lagen gewickelte Kunststoffband wird vorteilhaft aus einem Kunststoff aus Basis Polyimide oder deren Abkömmlinge bestehen. Eine solche Bewicklung etwa mit einem Polyimidband, das unter dem Handelsnamen KAPTON ® bekannt ist, ist in der Lage, auch hohe Druckbeanspruchungen auszuhalten. Dem kommt besondere Bedeutung zu, wenn erfindungsgemäße Temperatur - Fühlerkabel in explosionsgeschützten Anlagen eingesetzt werden und an die von daher besondere Sicherheitsanforderungen ( ATEX ) als vorbeugender Explosionsschutz gestellt werden. Diese Kriterien sind aber auch zu berücksichtigen im Hinblick auf geltende Normen, etwa nach DIN VDE 0170 / 0171, EN 50014 und EN 50019.

Von den vielen als Widerstandsmaterial verwendeten Werkstoffen hat sich Nickel zur Durchführung der Erfindung als am vorteilhaftesten erwiesen, etwa ein Ni 99, 4Fe der Firma Isabellenhütte, Dillenburg, das sich durch einen hohen, genau definierten Temperaturkoeffizienten des elektrischen Widerstandes auszeichnet. Die angegebenen höchsten Anwendungstemperaturen für ein Widerstandsthermometer von 250 °C liegen dabei in dem Temperaturbereich, in dem auch die erfindungsgemäße PTFE - Bandisolierung Temperaturen auszuhalten in der Lage ist.

Der Widerstands-Messdraht selbst ist auf einen Kernstrang wendelförmig aufgewickelt, der aus Gründen der Flexibilität und Temperaturbeständigkeit aus miteinander verseilten oder verflochtenen Glasseidefäden besteht. Wesentlich für die Erfindung ist, dass der Widerstands-Messdraht sicher auf dem Kernstrang gehalten ist, vor allem auch dann, wenn das Kabel montiert, etwa auf ein mediumführendes Rohr wendelförmig aufgewickelt wird. Diesem Zweck dient eine Haltewendel oder eine geschlossene Lage aus einem Polytetrafluorethylen. Ein wesentliches Merkmal des Temperatur - Fühlerkabels ist, daß die Verbindungsstellen zwischen Anschlußdrähten und Widerstands-Messdraht wenig auftragen, um eine ansprechende Gesamtansicht des Kabels zu gewährleisten. Erreicht wird dies durch eine metallische Klemm- oder Crimpverbindung.

Die Herstellung einer Länge eines Temperatur - Fühlerkabels von z. B. 5 m erlaubt keine kostengünstige Fertigung. Die Erfindung sieht daher vor, daß eine solche Länge konfektioniert ist aus einer vorgefertigten Kabellänge aus einer Vielzahl von aneinander gereihten, definierten Längen von Anschluss- und Widerstands-Messdrähten, die alle gemeinsam von einer hochtemperaturbeständigen Polytetrafluorethylen - Isolierung umschlossen sind, über der eine geschlossene Bewicklung aus einem Polyimidband angeordnet ist, die von einem aus metallischen Einzeldrähten bestehenden Schutzleiter überdeckt ist, und der seinerseits von einem ebenfalls hochtemperaturbeständigen Mantel aus einem Fluorpolymer überdeckt ist. Auf diese Weise sind Kabel beliebiger Länge herstellbar, die eine Vielzahl von Temperatur - Fühlerkabeln, ggf. auch unterschiedlicher Länge, enthalten, die bei der Konfektionierung einzeln abgelängt und mit den geeigneten Endanschlüssen versehen werden können.

Die Gesamtisolierung aller zu einer Kabellänge aneinander gereihter Widerstands-Mess- und Anschlussdrähte besteht in vorteilhafter Ausführungsform der Erfindung aus einem ungesinterten Wickelband aus Polytetrafluorethylen, das im gewickelten Zustand gesintert und von einem mit überlappenden Kanten gewickelten Polyimidband umschlossen ist. Das anschließende Metalldrahtgeflecht ist von einer oder mehreren Lagen eines ungesinterten Wickelbandes aus Polytetrafluorethylen überdeckt, das durch Sinterung im gewickelten Zustand das Kabel als Mantel dicht umschließt.

Die Kabellänge weist zweckmäßiger Weise auf der Manteloberfläche Markierungen zum maßgerechten Ablängen der einzelnen Temperatur - Fühlerkabel auf, beispielsweise Farbkennzeichnungen oder Prägungen.

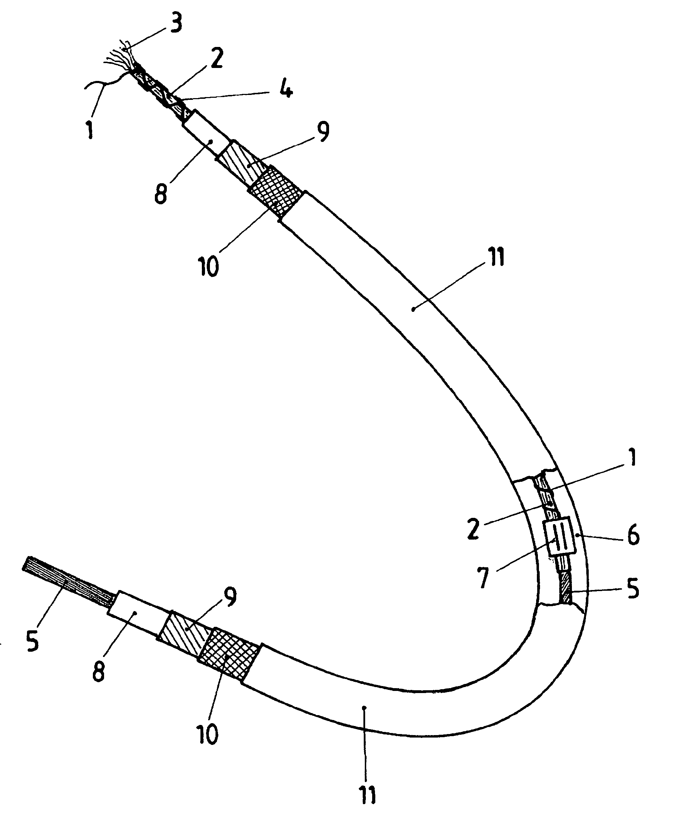

Die Erfindung sei an Hand des in der Figur als Ausführungsbeispiel dargestellten Längenabschnitts einer aus einer Mehrzahl von Temperatur - Fühlerkabeln bestehenden Kabellänge näher erläutert. Dargestellt ist die einseitige Verbindung des Widerstands-Messdrahtes eines Temperatur - Fühlerkabels mit einem Anschlussdraht im Verlaufe einer Kabellänge.
Der Widerstands-Messdraht 1 von z.B. 0,2 mm Dicke ist wendelförmig auf den Kernstrang 2, beispielsweise aus miteinander verseilten oder verflochtenen Glasseidefäden 3, aufgewickelt. Zur Festlegung des Widerstands-Messdrahtes 1 aus Nickel oder einer Nickellegierung auf dem Kernstrang 2 und zur Halterung insbesondere während der einzelnen späteren Verfahrensschritte zur Herstellung des bzw. der zu einer beliebigen Kabellänge zusammengeführten Temperatur - Fühlerkabel nach der Erfindung kann eine offene oder geschlossene Wendel 4 aus einem Polytetrafluorethylen - Band verwendet werden. Der Anschlussleiter für diesen Widerstands-Messdraht 1 ist mit 5 bezeichnet, er besteht vorteilhaft aus miteinander verseilten, verzinnten oder vernickelten Kupferdrähten zur Verbesserung der Flexibilität des Kabels. An der Verbindungsstelle 6 sind der Widerstands-Messdraht 1 und der Anschlussleiter 5 durch den Quetschverbinder 7 elektrisch leitend verbunden. Über die Verbindungsstelle 6 einschließlich der angrenzenden Längen Widerstands-Messdraht 1 und Anschlussleiter 5 ist nach der Erfindung die gemeinsame Isolierung 8 vorzugsweise aus einem PTFE - Band als geschlossene Bandlage aufgebracht. Darüber befindet sich eine Bewicklung 9 aus einem Polyimidband, vorzugsweise mit überlappenden Bandkanten aufgebracht. Umschlossen wird die Lage aus dem Polyimidband von dem aus metallischen Einzeldrähten bestehenden Geflecht 10, das seinerseits überdeckt wird von dem wiederum gemeinsamen Außenmantel 11, vorzugsweise ebenfalls aus einem Polytetrafluorethylen.

Die Herstellung eines Temperatur - Fühlerkabels nach der Erfindung erfolgt vorteilhaft in der Weise, daß zunächst der Widerstands-Messdraht 1 auf den Kernstrang 2 aufgewickelt und darüber eine Bebänderung aus einem ungesinterten PTFE - Band aufgebracht wird. Anschließend erfolgt die Sinterung dieses Bandes durch eine entsprechende Temperaturbehandlung sowie eine Vorkonfektionierung durch Ablängung der für das jeweilige Temperatur - Fühlerkabel benötigten Längen, z. B. von 5 m. Entsprechend lang kann man die Anschlussdrähte 5 wählen. In der Reihenfolge Anschlussdraht ― Widerstands-Messdraht - Anschlussdraht, Anschlussdraht ― Widerstands-Messdraht - Anschlussdraht etc. werden diese Elemente mittels der beschriebenen Quetsch - Verbinder zu einer beliebig langen Leitungslänge zusammengefügt. Diese Leitungslänge einschließlich aller vorhandener Quetschverbindungen wird zur elektrischen Isolierung ( 8 ) mit einem ungesinterten Polytetrafluorethylen - Band ein- oder mehrfach umwickelt, im gewickelten Zustand erfolgt dann die Sinterung durch entsprechende Wärmebehandlung.

Über die nunmehr isolierte Leiterlänge wird das Polyimidband 9 gewickelt und darüber das Metalldrahtgeflecht 10 aufgebracht. Der Außenmantel 11 wird vorteilhaft in Form einer Bewicklung aus einem ungesinterten PTFE - Band über das Metalldrahtgeflecht 10 gelegt und das Material während einer Wärmebehandlung gesintert. Zweckmäßig werden auf der Manteloberfläche Markierungen an den Stellen vorgesehen, die für eine nachfolgende Konfektionierung zu durchtrennen sind, um aus der gesamten Kabel- oder Leitungslänge einzelne Temperatur - Fühlerkabel nach der Erfindung, bestehend aus dem Widerstands-Messdraht und den beiderseitigen Anschlussdrähten, herauszutrennen.

Die zusammen mit den Widerstands-Messdrähten und Anschlussdrähten isolierten, mechanisch geschützten und ummantelten Quetschverbindungen tragen nicht auf, jedenfalls vergrößern sie den Kabeldurchmesser im Bereich der Verbindungsstellen nur unwesentlich.

## Patentansprüche

1. Temperatur - Fühlerkabel, bestehend aus jeweils definierten Längen eines Temperaturfühlers in Form eines auf einem Kernstrang (2) angeordneten Widerstarids-Messdrahtes (1) und mit den jeweiligen Enden des Widerstands-Messdrahtes (1) verbundenen niederohmigen elektrischen Anschlussdrähten (5), **dadurch gekennzeichnet, dass** die Anschlussdrähte (5) und der Widerstands-Messdraht (1) einschließlich ihrer Verbindungsstellen (6) von einer gemeinsamen Isolierung (8) aus einem hochtemperaturbeständigen Fluorpolymer umschlossen sind, und dass die gemeinsame Isolierung (8) von einer geschlossenen Bewicklung (9) aus einem mechanisch hochfesten Kunststoffband überdeckt ist, auf der sich ein aus metallischen Einzeldrähten bestehender Schutzleiter (10) befindet, der seinerseits von einem Außenmantel (11) umschlossen ist.

2. Temperatur - Fühlerkabel nach Anspruch 1, **dadurch gekennzeichnet, dass** die gemeinsame Isolierung (8) aus dem hochtemperaturbeständigen Fluorpolymer aus einem aus der Schmelze nicht verarbeitbaren Polytetrafluorethylen besteht.

3. Temperatur - Fühlerkabel nach Anspruch 1, **dadurch gekennzeichnet, dass** das in einer oder mehreren Lagen gewickelte, mechanisch hochfeste Kunststoffband (9) aus einem Kunststoff auf Basis Polyimide oder deren Abkömmlinge besteht.

4. Temperatur - Fühlerkabel nach Anspruch 1 oder einem der folgenden, **dadurch gekennzeichnet, dass** der Schutzleiter (10) ein aus metallischen Drähten bestehendes Geflecht ist.

5. Temperatur - Fühlerkabel nach Anspruch 1 oder einem der folgenden, **dadurch gekenntzeichnet**, **dass** der Widerstands-Messdraht (1) aus Nickel oder einer Nickellegierung besteht.

6. Temperatur - Fühlerkabel nach Anspruch 1 oder einem der folgenden, **dadurch gekennzeichnet, dass** der Kernstrang (2) aus miteinander verseilten oder verflochtenen Glasseidefäden besteht.

7. Temperatur - Fühlerkabel nach Anspruch 1 oder einem der folgenden, **dadurch gekennzeichnet, dass** der Widerstands-Messdraht (1) auf den Kernstrang (2) aufgeseilt oder aufgewickelt ist.

8. Temperatur - Fühlerkabel nach Anspruch 7, **dadurch gekennzeichnet, dass** der Widerstands-Messdraht (1) auf dem Kernstrang (2) durch eine Schicht aus einem hochtemperaturbeständigen Fluorpolymer in Lage gehalten ist.

9. Temperatur - Fühlerkabel nach Anspruch 8, **dadurch gekennzeichnet, dass** die Schicht aus dem hochtemperaturbeständigen Fluorpolymer aus einem gewickelten Band (4) aus Polytetrafluorethylen besteht.

10. Temperatur - Fühlerkabel nach Anspruch 1 oder einem der folgenden, **dadurch gekennzeichnet, dass** die Verbindungsstellen (6) Klemmverbindungen sind.

11. Verfahren zur Herstellung eines Temperatur - Fühlerkabels nach Anspruch 1 oder einem der folgenden, **dadurch gekennzeichnet, dass** das Fühlerkabel konfektioniert wird aus einer vorgefertigten Kabellänge aus einer Vielzahl aneinander gereihter, definierter Längen von Anschlussdrähten (5) und Widerstands-Messdrähten (1), die alle gemeinsam von einer hochtemperaturbeständigen Polytetrafluorethylen - Isolierung (8) umschlossen sind, über der eine geschlossene Bewicklung (9) aus einem Polyimidband angeordnet ist, die von einem aus metallischen Einzeldrähten bestehenden Schutzleiter (10) überdeckt ist, und der seinerseits von einem ebenfalls hochtemperturbeständigen Außenmantel (11) aus einem Fluorpolymer überdeckt ist.

12. Verfahren zur Herstellung eines Temperatur - Fühlerkabels nach Anspruch 11, **dadurch gekennzeichnet, dass** die den Anschlussdrähten (5) und den Widerstands-Messdrähten (1) gemeinsame Polytetrafluorethylen -Isolierung (8) aus einem Wickelband aus ungesintertem Polytetrafluorethylen besteht, das erst im gewickelten Zustand des Bandes gesintert wird, und dass die gemeinsame Isolierung (8) mit einem Polyimidband (9) umwickelt und anschließend ein Metalldrahtgeflecht (10) auf die Polyimidbandbewicklung (9) aufgebracht und schließlich das Metalldrahtgeflecht (10) von einer oder mehreren Lagen eines ungesinterten Wickelbandes aus Polytetrafluorethylen überdeckt wird, das durch Sinterung im gewickelten Zustand die Kabelseele als Außenmantel (11) dicht umschließt.

13. Verfahren zur Herstellung eines Temperatur - Fühlerkabels nach Anspruch 11 oder 12, **dadurch gekennzeichnet, dass** das ungesinterte Polytetrafluorethylen - Band eine plankonvexe Querschnittsform aufweist oder im Querschnitt schalenförmig ausgebildet ist, wobei von der Bandmitte aus nach beiden Seiten die Banddicke bis zum Rand stufenlos abnimmt.

14. Verfahren zur Herstellung eines Temperatur - Fühlerkabels nach Anspruch 11 oder einem der folgenden, **dadurch gekennzeichnet, dass** der Außenmantel (8) mit Markierungen zum maßgerechten, konfektionierten Ablängen der einzelnen Temperatur - Fühlerkabel versehen wird.

15. Verfahren zur Herstellung eines Temperatur - Fühlerkabel nach Anspruch 14, **dadurch gekennzeichnet, dass** die einzelnen Verbindungsstellen (6) von Anschlussdrähten (5) und Widerstands-Messdrähten (1) so gewählt werden, dass nur eine unwesentliche Verdickung des Kabeldurchmessers diese Stellen markiert.

## Claims

1. Temperature sensor cable consisting of defined lengths of a temperature sensor in the form of a resistance measuring wire (1) arranged on a core strand (2) and low-impedance electrical connecting wires (5) connected to the respective ends of the resistance measuring wire (1), **characterized in that** the connecting wires (5) and the resistance measuring wire (1) together with their connection points (6) are enclosed in a common insulation (8) consisting of a high-temperature-resistant fluoropolymer, and **in that** the common insulation (8) is covered with a closed coil (9) consisting of a tape of high-mechanical-strength plastic material over which a protective earth conductor (10) consisting of discrete metal wires is placed and enclosed in turn in an outer sheath (11).

2. Temperature sensor cable according to Claim 1, **characterized in that** the common insulation (8) consisting of high-temperature-resistant fluoropolymer consists of non-melt-processable polytetrafluoroethylene.

3. Temperature sensor cable according to Claim 1, **characterized in that** the tape (9) of high-mechanical-strength plastic material wound in one or more layers consists of a plastic based on polyimides or their derivatives.

4. Temperature sensor cable according to Claim 1 or any one of the following claims, **characterized in that** the protective earth conductor (10) consists of metal wire braiding.

5. Temperature sensor cable according to Claim 1 or any one of the following claims, **characterized in that** the resistance measuring wire (1) consists of nickel or nickel alloy.

6. Temperature sensor cable according to Claim 1 or any one of the following claims, **characterized in that** the core strand (2) consists of twisted or plaited continuous-filament glass yarns.

7. Temperature sensor cable according to Claim 1 or any one of the following claims, **characterized in that** the resistance measuring wire (1) is twisted or wound on to the core strand (2).

8. Temperature sensor cable according to Claim 7, **characterized in that** the resistance measuring wire (1) is held in position on the core strand (2) by a layer of high-temperature-resistant fluoropolymer.

9. Temperature sensor cable according to Claim 8, **characterized in that** the layer of high-temperature-resistant fluoropolymer consists of a wound tape (4) of polytetrafluoroethylene.

10. Temperature sensor cable according to Claim 1 or any one of the following claims, **characterized in that** the connecting points (6) are clamp connections.

11. Process for the manufacture of a temperature sensor cable according to Claim 1 or any one of the following claims, **characterized in that** the sensor cable is made up from a prefabricated length of cable consisting of a large number of defined lengths strung together end to end of connecting wires (5) and resistance measuring wires (1) all enclosed together in a high-temperature-resistant polytetrafluoroethylene insulation (8) over which a closed coil (9) consisting of polyimide tape is arranged, said tape being covered with a protective earth lead (10) consisting of discrete metal wires, enclosed in turn in an outer sheath (11) which also consists of high-temperature-resistant fluoropolymer.

12. Process for the manufacture of a temperature sensor cable according to Claim 11, **characterized in that** the polytetrafluoroethylene insulation (8) common to the connecting wires (5) and resistance measuring wires (1) consists of a wound tape of unsintered polytetrafluoroethylene which is sintered only after the tape has been wound, and **in that** the common insulation (8) is wrapped with wound polyimide tape (9) and a metal wire braiding (10) is then fitted over the wound polyimide tape, and finally the metal wire braiding (10) is covered with one or more layers of an unsintered wound tape consisting of polytetrafluoroethylene which is made to tightly enclose the cable core as an outer sheath (11) by sintering in the wound condition.

13. Process for the manufacture of a temperature sensor cable according to Claim 11 or Claim 12, **characterized in that** the unsintered polytetrafluoroethylene tape has a planoconvex or saucer-shaped cross-section with the thickness of the tape decreasing steplessly from the centre of the tape to the edge on either side.

14. Process for the manufacture of a temperature sensor cable according to Claim 11 or any one of the following claims, **characterized in that** the outer sheath (8) is provided with markings to allow dimensionally accurate cutting to length of the individual made-up temperature sensor cables.

15. Process for the manufacture of a temperature sensor cable according to Claim 14, **characterized in that** the individual connecting points (6) of the connecting wires (5) and resistance measuring wires (1) are selected so that the thickening of the cable diameter marking these points is negligible.

## Revendications

1. Câble capteur de température composé de longueurs respectives, définies d'un capteur de température sous la forme d'un fil de mesure résistant (1) installé sur un cordon central (2) et des fils de branchement électrique (5), faiblement ohmiques, reliés aux extrémités respectives du fil de mesure résistant (1),
**caractérisé en ce que**
- les fils de branchement (5) et le fil de mesure résistant (1) y compris leurs points de jonction (6), sont entourés d'une isolation commune (8) en un fluoropolymère résistant aux températures élevées, et
- l'isolation commune (8) est couverte par un enrubannage fermé (9) réalisé par un ruban de matière plastique, mécaniquement très résistant, sur lequel il y a un écran conducteur (10) formé de fils métalliques séparés, cet écran étant lui-même entouré par une gaine extérieure (11).

2. Câble capteur de température selon la revendication 1,
**caractérisé en ce que**
l'isolation commune (8) en un fluoropolymère résistant aux températures élevées, est formée d'un polytétrafluoréthylène ne pouvant pas être traité à partir d'une masse fondue.

3. Câble capteur de température selon la revendication 1,
**caractérisé en ce que**
le ruban de matière plastique (9) mécaniquement très résistant, enrubanné en une ou plusieurs couches, est en une matière plastique à base de polyimides ou de leurs dérivés.

4. Câble capteur de température selon la revendication 1 ou l'une des revendications suivantes,
**caractérisé en ce que**
l'écran conducteur (10) est un tissu de fils métalliques.

5. Câble capteur de température selon la revendication 1 ou l'une des revendications suivantes,
**caractérisé en ce que**
le fil de mesure résistant (1) est en nickel ou en un alliage de nickel.

6. Câble capteur de température selon la revendication 1 ou l'une des revendications suivantes,
**caractérisé en ce que**
le cordon central (2) est formé de fils de soie de verre tressés ou câblés.

7. Câble capteur de température selon la revendication 1 ou l'une des revendications suivantes,
**caractérisé en ce que**
le fil de mesure résistant (1) est câblé ou enroulé sur le cordon central (2).

8. Câble capteur de température selon la revendication 7,
**caractérisé en ce que**
le fil de mesure résistant (1) est maintenu en place sur le cordon central (2) par une couche de polymère fluoré résistant aux températures élevées.

9. Câble capteur de température selon la revendication 8,
**caractérisé en ce que**
la couche de polymère fluoré résistant aux températures élevées est composée d'un ruban (4) de polytétrafluoréthylène, enroulé.

10. Câble capteur de température selon la revendication 1 ou l'une des revendications suivantes,
**caractérisé en ce que**
les points de liaison (6) sont des liaisons par pincement.

11. Procédé de fabrication d'un câble capteur de température selon la revendication 1 ou l'une des revendications suivantes,
**caractérisé en ce que**
le câble capteur est fabriqué à partir d'une longueur de câble préfabriqué comprenant un ensemble de fils de branchement (5) et de fils de mesure résistants (1), de longueurs définies mises en série, qui sont toutes entourées en commun d'une isolation (8) en polytétrafluoréthylène résistant aux températures élevées, par-dessus laquelle est disposé, un enroulement fermé (9) réalisé en un ruban de polyimide, cet enroulement étant recouvert d'un écran protecteur (10) en fils métalliques séparés, et cet écran étant lui-même recouvert par une gaine extérieure (11) également résistante aux températures élevées, réalisée en un polymère fluoré.

12. Procédé de fabrication d'un câble capteur de température selon la revendication 11,
**caractérisé en ce que**
- l'isolation de polytétrafluoréthylène (8), commune aux fils de branchement (5) et aux fils de mesure résistants (1), se compose d'un ruban enroulé, en polytétrafluoréthylène non fritté, qui est seulement fritté lorsque le ruban est enroulé, et
- l'isolation commune (8) est entourée par enroulement d'un ruban de polyimide (9) et ensuite, un tissu de fils métalliques (10) est appliqué sur l'enroulement de ruban de polyimide (9) et enfin, le tissu de fils métalliques (10) est recouvert par une ou plusieurs couches d'un ruban enroulé, non fritté de polytétrafluoréthylène, qui entoure de manière étanche, par frittage à l'état enroulé, l'âme du câble, en constituant son enveloppe extérieure (11).

13. Procédé de fabrication d'un câble capteur de température selon la revendication 11 ou 12,
**caractérisé en ce que**
le ruban de polytétrafluoréthylène non fritté a une forme de section plane, convexe ou une section en forme de coquille, et l'épaisseur du ruban diminue en continu à partir du milieu du ruban vers les côtés jusqu'au bord.

14. Procédé de fabrication d'un câble capteur de température selon la revendication 11 ou l'une des revendications suivantes,
**caractérisé en ce que**
l'enveloppe extérieure (8) est munie de marquages pour confectionner de manière exacte la longueur des différents câbles capteurs de température.

15. Procédé de fabrication d'un câble capteur de température selon la revendication 14,
**caractérisé en ce que**
les différents points de liaison (6) des fils de branchement (5) et des fils de mesure résistants (1) sont choisis pour que ces points ne produisent qu'un épaississement négligeable du diamètre du câble.
